# EUROPEAN PATENT APPLICATION

(11) **EP 4 831 243 A1**
(43) Date of publication of application: **28.10.2026**
(21) Application number: 24908075.5
(22) Date of filing: 18.12.2024
(51) Int. Cl.: C08L 53/00, C08L 23/06, C08L 53/02, C08L 23/0807, C08K 3/34, C08L 23/10, C08L 23/04

(54) **POLYPROPYLENE RESIN COMPOSITION AND MOLDED ARTICLE PRODUCED THEREFROM**

(30) Priority: 21.12.2023 KR 20230188876; 11.09.2024 KR 20240124155; 16.12.2024 KR 20240187707
(71) Applicant: LOTTE CHEMICAL CORPORATION, Seoul 05551 (KR)
(72) Inventor: KIM, In Chol, Uiwiang-si Gyeonggi-do 16073 (KR); PARK, Seung Wook, Uiwiang-si Gyeonggi-do 16073 (KR); HAN, Sung Wook, Uiwiang-si Gyeonggi-do 16073 (KR); KIM, Han Pyol, Uiwiang-si Gyeonggi-do 16073 (KR); LEE, Hyeong Shin, Uiwiang-si Gyeonggi-do 16073 (KR)
(74) Representative: Germain Maureau
(86) International application number: PCT/KR2024/020628
(87) International publication number: WO 2025/135792

(57) **Abstract**

A polypropylene resin composition of the present invention comprises: about 100 parts by weight of a block polypropylene resin having an isotactic index of about 98.5 wt% or more; about 8 to about 27 parts by weight of a melt blend of about 65 to about 99 wt% of an ultra-low-density polyethylene having a density, measured in accordance with ISO 1183-1, of about 0.88 to about 0.91 g/cm³, and about 1 to about 35 wt% of a styrenic thermoplastic elastomer; about 8 to about 27 parts by weight of a polyolefin elastomer; and about 20 to about 45 parts by weight of talc. The polypropylene resin composition has excellent impact resistance, rigidity, dimensional stability, balance of properties thereof, and the like.

## Description

### [Technical Field]

The present invention relates to a polypropylene resin composition and a molded article produced therefrom. More specifically, the present invention relates to a polypropylene resin composition having excellent impact resistance, stiffness, dimensional stability, a balance of these physical properties, and the like, and a molded article produced therefrom.

### [Background Art]

Polyolefin resins are materials widely used in fields such as electrical parts, automobiles, and construction materials as they are easy to manufacture in the forms of injection-molded articles, films, and blow-molded articles due to excellent chemical resistance, weather resistance, and processability. However, common propylene-based resins have low impact resistance; thus, olefin-based elastomers based on a copolymer of ethylene and an α-olefin are applied to reinforce impact resistance and the like.

However, the rubber (olefin-based elastomer) added in this process may reduce the stiffness and the like of the propylene-based resin composition. In addition, if an inorganic filler or the like is added to improve the stiffness, the impact resistance and the like may be reduced. Further, depending on the characteristics of crystalline polymers, propylene-based resins exhibit high shrinkage characteristics, and there is a concern that post-shrinkage may occur even when an olefin-based elastomer and an inorganic filler are added.

Therefore, there is a need for the development of a polypropylene resin composition having excellent impact resistance, stiffness, dimensional stability, a balance of these physical properties, and the like.

The background art of the present invention is disclosed in Korean Patent Registration No. 10-0842162 and the like.

### [Disclosure]

### [Technical Problem]

It is one object of the present invention to provide a polypropylene resin composition having excellent impact resistance, stiffness, dimensional stability, a balance of these physical properties, and the like.

It is another object of the present invention to provide a molded article formed from the polypropylene resin composition.

The above and other objects of the present invention will become apparent from the detailed description of the following embodiments.

### [Technical Solution]

1. One aspect of the present invention relates to a polypropylene resin composition. The polypropylene resin composition comprises about 100 parts by weight of a block polypropylene resin having an isotactic index of about 98.5 wt% or more; about 8 to about 27 parts by weight of a melt blend of about 65 to about 99 wt% of very low density polyethylene having a density of about 0.88 to about 0.91 g/cm³ measured in accordance with ISO 1183-1 and about 1 to about 35 wt% of a styrene-based thermoplastic elastomer; about 8 to about 27 parts by weight of a polyolefin elastomer; and about 20 to about 45 parts by weight of talc.
2. In embodiment 1, the block polypropylene resin may have a melt-flow index of about 20 to about 40 g/10 min measured in accordance with ASTM D1238 under conditions of 230°C and a load of 2.16 kg.
3. In embodiment 1 or 2, the very low density polyethylene may have a melt-flow index of about 1 to about 20 g/10 min measured in accordance with ASTM D1238 under conditions of 230°C and a load of 2.16 kg.
4. In Embodiments 1 to 3, the styrene-based thermoplastic elastomer may comprise at least one of a styrene-ethylene-butylene-styrene block copolymer, a styrene-ethylene-propylene-styrene block copolymer, a styrene-butadiene-styrene block copolymer, a styrene-isoprene-styrene block copolymer, or a styrene-butadiene-butylene-styrene block copolymer.
5. In Embodiments 1 to 4, the styrene-based thermoplastic elastomer may have a content of a styrene-based monomer of about 5 to about 50 wt%.
6. In Embodiments 1 to 5, the styrene-based thermoplastic elastomer may have a weight average molecular weight of about 100,000 to about 450,000 g/mol.
7. In Embodiments 1 to 6, the polyolefin elastomer may comprise at least one of ethylene-propylene rubber, ethylene-butene rubber, or ethylene-octene rubber.
8. In Embodiments 1 to 7, the talc may have an average particle size of about 0.5 to about 3.8 µm measured with a particle size measuring device.
9. In Embodiments 1 to 8, the polypropylene resin composition may be in a form in which the block polypropylene resin, the polyolefin elastomer, and the talc are a continuous phase, the very low density polyethylene is a dispersed phase, and the styrene-based thermoplastic elastomer is present at an interface between the continuous phase and the dispersed phase.
10. In Embodiments 1 to 9, the polypropylene resin composition may have a Charpy impact strength of about 26.5 to about 45 kJ/m² measured according to ISO 180.
11. In Embodiments 1 to 10, the polypropylene resin composition may have a flexural modulus of about 1,790 to about 2,200 MPa measured at 2 mm/min according to ISO 178.
12. In Embodiments 1 to 11, the polypropylene resin composition may have a coefficient of linear expansion of about 5 to about 6.7 µm/m·°C measured for a specimen with a size of 10 mm × 10 mm × 6.4 mm while increasing the temperature from -30°C to 30°C at a rate of 5°C/min according to ASTM E831.
13. Another aspect of the present invention relates to a molded article. The molded article is formed of the polypropylene resin composition according to any one of embodiments 1 to 12.

### [Advantageous Effects]

The present invention has an effect of providing a polypropylene resin composition having excellent impact resistance, stiffness, dimensional stability, a balance of these physical properties, and the like, and a molded article formed therefrom.

### [Best Mode]

Hereinafter, embodiments of the present invention will be described in detail.

A polypropylene resin composition according to the present invention comprises (A) a block polypropylene resin; (B) a melt blend of very low density polyethylene and a styrene-based thermoplastic elastomer; (C) a polyolefin elastomer; and (D) talc.

As used herein to represent a specific numerical range, "a to b" is defined as "≥a and ≤b".

### (A) Block polypropylene resin

The block polypropylene resin according to one embodiment of the present invention is applied together with a melt blend of very low density polyethylene and a styrene-based thermoplastic elastomer, a polyolefin elastomer, and talc, and the like, to improve impact resistance, stiffness, dimensional stability, a balance of these physical properties, and the like of the polypropylene resin composition. In this regard, a block polypropylene resin having an isotactic index of about 98.5 wt% or more may be used.

In some embodiments, the block polypropylene resin may be a block polypropylene resin composed of a homo-polypropylene block and an ethylene-propylene copolymer block and/or a homo-polyethylene block.

In some embodiments, the block polypropylene resin may have an isotactic index of about 98.5 wt% or more, for example, about 98.5 to about 99.9 wt%. When the isotactic index of the block propylene resin is less than about 98.5 wt%, the stiffness, dimensional stability (low shrinkage characteristics), and the like of the polypropylene resin composition may be deteriorated. Here, the isotactic index is expressed in wt% by weighing a remaining isotactic component after dissolving an atactic component by boiling n-heptane in accordance with ISO 9113:1986.

In some embodiments, the block polypropylene resin may have a melt-flow index (MI) of about 20 to about 40 g/10 min, for example, about 25 to about 35 g/10 min, measured in accordance with ASTM D1238 under conditions of 230°C and a load of 2.16 kg. Within this range, the mechanical properties, dimensional stability, a balance of these physical properties, and the like of the polypropylene resin composition may be excellent.

### (B) Melt blend of very low density polyethylene and styrene-based thermoplastic elastomer

The melt blend of very low density polyethylene and a styrene-based thermoplastic elastomer according to one embodiment of the present invention is applied together with the block polypropylene resin, the polyolefin elastomer, the talc, and the like, to improve impact resistance, stiffness, dimensional stability, a balance of these physical properties, and the like of the polypropylene resin composition.

In some embodiments, the very low density polyethylene (VLDPE) may have a density of about 0.88 to about 0.91 g/cm³, for example, about 0.885 to about 0.90 g/cm3, measured in accordance with ISO 1183-1. When the density of the very low density polyethylene is less than about 0.88 g/cm³, the appearance characteristics and the like of the polypropylene resin composition (molded article) may be deteriorated, and when it exceeds about 0.90 g/cm³, the impact resistance, stiffness, and the like of the polypropylene resin composition may be deteriorated.

In some embodiments, the very low density polyethylene may have a melt-flow index of about 1 to about 20 g/10 min measured in accordance with ASTM D1238 under conditions of 190°C and a load of 2.16 kg. Within this range, the moldability and the like of the polypropylene resin composition may be excellent.

In some embodiments, the very low density polyethylene may have a weight average molecular weight of about 100,000 to about 550,000 g/mol, for example, about 150,000 to about 500,000 g/mol, measured by gel permeation chromatography (GPC). Within this range, the mechanical properties, elasticity, and the like of the polypropylene resin composition may be excellent.

In some embodiments, the very low density polyethylene may be included in an amount of about 65 to about 99 wt%, for example, about 70 to about 95 wt%, based on 100 wt% of the total melt blend. When the content of the very low density polyethylene is less than about 65 wt% based on 100 wt% of the total melt blend, the stiffness, dimensional stability, and the like of the polypropylene resin composition may be deteriorated, and when it exceeds about 99 wt%, the impact resistance and the like of the polypropylene resin composition may be deteriorated.

In some embodiments, the styrene-based thermoplastic elastomer may include a styrene-ethylene-butylene-styrene block copolymer, a styrene-ethylene-propylene-styrene block copolymer, a styrene-butadiene-styrene block copolymer, a styrene-isoprene-styrene block copolymer, a styrene-butadiene-butylene-styrene block copolymer, or a combination thereof.

In some embodiments, the styrene-based thermoplastic elastomer may have a styrene-based monomer content of about 5 to about 50 wt%, for example, about 5 to about 45 wt%. Within this range, the mechanical properties, elasticity, and the like of the polypropylene resin composition may be excellent.

In some embodiments, the styrene-based thermoplastic elastomer may have a weight average molecular weight of about 100,000 to about 450,000 g/mol, for example, about 150,000 to about 400,000 g/mol, measured by gel permeation chromatography (GPC). Within this range, the mechanical properties, moldability, and the like of the polypropylene resin composition may be excellent.

In some embodiments, the styrene-based thermoplastic elastomer may be included in an amount of about 1 to about 35 wt%, for example, about 5 to about 30 wt%, based on 100 wt% of the total melt blend. When the content of the styrene-based thermoplastic elastomer is less than 1 wt% based on 100 wt% of the total melt blend, the impact resistance and the like of the polypropylene resin composition may be deteriorated, and when it exceeds 35 wt%, the stiffness, dimensional stability, and the like of the polypropylene resin composition may be deteriorated.

In some embodiments, the melt blend may be prepared according to a preparation method comprising: preparing a mixture by mixing the very low density polyethylene and the styrene-based thermoplastic elastomer; and melt-extruding the mixture.

In some embodiments, the melt-extruding may be performed at about 150 to about 250°C, for example, about 170 to about 230°C, using a conventional twin-screw extruder. Within this range, the mechanical properties, moldability, a balance of these physical properties, and the like of the polypropylene resin composition may be excellent.

In some embodiments, the melt blend may be prepared in a pellet form, and the prepared pellets may be applied to various thermoplastic resin compositions and molded articles (products), or the melt blend alone may be manufactured into molded articles (products) through various molding methods such as injection molding, extrusion molding, vacuum molding, and casting molding. Such molding methods are well known by those skilled in the art to which the present invention pertains.

In some embodiments, the melt blend may be in the form of a mixture of the very low density polyethylene as a continuous phase and the styrene-based thermoplastic elastomer as a dispersed phase, and the dispersed phase may have an average particle size of about 0.1 to about 3 µm, for example, about 0.3 to about 1 µm, measured with a transmission electron microscope.

In some embodiments, the melt blend may be included in an amount of about 8 to about 27 parts by weight, for example, about 8.3 to about 25 parts by weight, based on about 100 parts by weight of the block polypropylene resin. When the content of the melt blend is less than about 8 parts by weight based on about 100 parts by weight of the block polypropylene resin, the impact resistance, dimensional stability, and the like of the polypropylene resin composition may be deteriorated, and when it exceeds about 27 parts by weight, the stiffness and the like of the polypropylene resin composition may be deteriorated.

### (C) Polyolefin elastomer

The polyolefin elastomer (POE) according to one embodiment of the present invention is applied together with the block polypropylene resin, the melt blend of very low density polyethylene and a styrene-based thermoplastic elastomer, the talc, and the like, to improve impact resistance, stiffness, dimensional stability, a balance of these physical properties, and the like of the polypropylene resin composition, and a polyolefin elastomer applied to a conventional thermoplastic resin composition may be used.

In some embodiments, the polyolefin elastomer may include ethylene-propylene rubber, ethylene-butene rubber, ethylene-octene rubber, a combination thereof, or the like. For example, it may include ethylene-butene rubber, ethylene-octene rubber, and the like.

In some embodiments, the polyolefin elastomer may have a density of about 0.85 to about 0.87 g/cm³, for example, about 0.855 to about 0.865 g/cm³, measured in accordance with ISO 1183-1. Within this range, the mechanical properties and the like of the polypropylene resin composition may be excellent.

In some embodiments, the polyolefin elastomer may have a melt-flow index of about 0.5 to about 10 g/10 min, for example, about 1 to about 5 g/10 min, measured in accordance with ASTM D1238 under conditions of 190°C and a load of 2.16 kg. Within this range, the mechanical properties, dimensional stability, a balance of these physical properties, and the like of the polypropylene resin composition may be excellent.

In some embodiments, the polyolefin elastomer may be included in an amount of about 8 to about 27 parts by weight, for example, about 8.3 to about 25 parts by weight, based on about 100 parts by weight of the block polypropylene resin. When the content of the polyolefin elastomer is less than about 8 parts by weight based on about 100 parts by weight of the block polypropylene resin, the impact resistance, dimensional stability, and the like of the polypropylene resin composition may be deteriorated, and when it exceeds about 27 parts by weight, the stiffness and the like of the polypropylene resin composition may be deteriorated.

### (D) Talc

The talc according to one embodiment of the present invention is applied together with the block polypropylene resin, the melt blend of very low density polyethylene and a styrene-based thermoplastic elastomer, the polyolefin elastomer, and the like, to improve impact resistance, stiffness, dimensional stability, a balance of these physical properties, and the like of the polypropylene resin composition, and a talc applied to a conventional thermoplastic resin composition may be used.

In some embodiments, the talc is a plate-shaped inorganic filler and may have an average particle size of about 0.5 to about 3.8 µm, for example, about 1 to about 3.5 µm, measured with a particle size analyzer (Malvern Mastersizer 3000). Within this range, the mechanical properties, dimensional stability, and the like of the polypropylene resin composition may be excellent.

In some embodiments, the talc may be included in an amount of about 20 to about 45 parts by weight, for example, about 25 to about 40 parts by weight, based on about 100 parts by weight of the block polypropylene resin. When the content of the talc is less than about 20 parts by weight based on about 100 parts by weight of the block polypropylene resin, the stiffness, dimensional stability, and the like of the polypropylene resin composition may be deteriorated, and when it exceeds about 45 parts by weight, the impact resistance and the like of the polypropylene resin composition may be deteriorated.

The polypropylene resin composition according to one embodiment of the present invention may further include additives included in a conventional thermoplastic resin composition. Examples of the additives may include flame retardants, fillers, stabilizers, lubricants, antibacterial agents, release agents, mixtures thereof, and the like, but are not limited thereto. When the additives are used, the content thereof may be about 0.001 to about 40 parts by weight, for example, about 0.1 to about 10 parts by weight, based on about 100 parts by weight of the block polypropylene resin, but is not limited thereto.

The polypropylene resin composition according to one embodiment of the present invention may be in a form of pellets prepared by mixing the constituents and melt-extruding the mixture at about 180 to about 320°C, for example, about 200 to about 280°C, using a conventional twin-screw extruder.

In some embodiments, the polypropylene resin composition may be in a form in which the block polypropylene resin, the polyolefin elastomer, and the talc are a continuous phase, the very low density polyethylene is a dispersed phase, and the styrene-based thermoplastic elastomer is present at an interface between the continuous phase and the dispersed phase. Specifically, the continuous phase may be in a form in which the polyolefin elastomer and the talc are each dispersed in the block polypropylene resin, and the dispersed phase (very low density polyethylene) may appear to form a core-shell shape with the styrene-based thermoplastic elastomer at the interface (a shell shape in which the styrene-based thermoplastic elastomer covers at least a portion of a core made of the very low density polyethylene).

In some embodiments, the core-shell type dispersed phase may have an average particle diameter of about 0.1 to about 3 µm, for example, about 0.3 to about 1 µm, measured by using a transmission electron microscope (TEM, manufacturer: JEOL, device name: JEM-1400) after staining a specimen, which is sliced with a cryomicrotome, with 0.5% ruthenium tetroxide. Within this range, the mechanical properties and the like of the polypropylene resin composition may be excellent.

In some embodiments, the polypropylene resin composition may have a Charpy impact strength of about 26.5 to about 45 kJ/m², for example, about 27 to about 35 kJ/m², measured at room temperature (about 23°C) in accordance with ISO 180.

In some embodiments, the polypropylene resin composition may have a flexural modulus of about 1,790 to about 2,200 MPa, for example, about 1,800 to about 2,000 MPa, measured at 2 mm/min in accordance with ISO 178.

In some embodiments, the polypropylene resin composition may have a coefficient of linear thermal expansion of about 5 to about 6.7 µm/m·°C, for example, about 5.2 to about 6.5 µm/m·°C, measured on a specimen having a size of 10 mm × 10 mm × 6.4 mm while increasing the temperature from -30°C to 30°C at a rate of 5°C/min in accordance with ASTM E831.

A molded article according to the present invention is formed from the polypropylene resin composition. The polypropylene resin composition may be prepared in a pellet form, and the prepared pellets may be manufactured into various molded articles (products) through various molding methods such as injection molding, extrusion molding, vacuum molding, and casting molding. Such molding methods are well known by those skilled in the art to which the present invention pertains.

In some embodiments, the molded article is useful for automotive interior/exterior materials, home appliance housings, and the like, due to its excellent impact resistance, stiffness, dimensional stability, and a balance of these physical properties.

### [Mode for Invention]

Next, the present invention will be described in more detail with reference to some examples. It should be understood that these examples are provided for illustration only and are not to be construed in any way as limiting the invention.

### EXAMPLE

Details of components used in Examples and Comparative Examples are as follows.

### (A) Block polypropylene resin

(A1) Block polypropylene resin (B-PP, manufacturer: S-OIL, product name: MQ900, isotactic index: 99.5 wt%, melt-flow index: about 30 g/10 min) was used.
(A2) Block polypropylene resin (B-PP, manufacturer: S-OIL, product name: MQ100, isotactic index: 97 wt%, melt-flow index: about 30 g/10 min) was used.
(B) Very low density polyethylene and styrene-based thermoplastic elastomer
(B1) A melt blend prepared by melt-extruding 90 wt% of very low density polyethylene having a density of about 0.885 g/cm³ and 10 wt% of a styrene-ethylene-butylene-styrene block copolymer (manufacturer: Sinopec, product name: YH-503T) at about 200°C using a twin-screw extruder was used.
(B2) A melt blend prepared by melt-extruding 90 wt% of very low density polyethylene having a density of about 0.92 g/cm³ and 10 wt% of a styrene-ethylene-butylene-styrene block copolymer (manufacturer: Sinopec, product name: YH-503T) at about 200°C using a twin-screw extruder was used.
(B3) A melt blend prepared by melt-extruding 60 wt% of very low density polyethylene having a density of about 0.885 g/cm³ and 40 wt% of a styrene-ethylene-butylene-styrene block copolymer (manufacturer: Sinopec, product name: YH-503T) at about 200°C using a twin-screw extruder was used.
(B4) A melt blend prepared by melt-extruding 99.5 wt% of very low density polyethylene having a density of about 0.885 g/cm³ and 0.5 wt% of a styrene-ethylene-butylene-styrene block copolymer (manufacturer: Sinopec, product name: YH-503T) at about 200°C using a twin-screw extruder was used.
(B5) 90 wt% of very low density polyethylene having a density of about 0.885 g/cm³ and 10 wt% of a styrene-ethylene-butylene-styrene block copolymer (manufacturer: Sinopec, product name: YH-503T) were simply mixed.

### (C) Polyolefin elastomer

Ethylene-butene rubber (EBR, manufacturer: LG Chem, product name: LC565) was used.

### (D) Talc

Talc (manufacturer: KOCH, product name: KC-5000, average particle size: about 3.5 µm) was used.

### Examples 1 to 7 and Comparative Examples 1 to 11

The respective constituent components were added in the amounts as shown in Tables 1, 2, and 3 below, and then extruded at about 250°C to prepare pellets. For the extrusion, a twin-screw extruder with L/D = 48 and a diameter of 75 mm was used. The prepared pellets were dried at about 80°C for about 2 hours or more and then injected using a 110-ton injection molding machine (molding temperature: about 210°C, mold temperature: about 50°C) to prepare specimens. The physical properties of the prepared specimens were evaluated by the following methods, and the results are shown in Tables 1, 2, and 3 below.

### Property evaluation

(1) Charpy impact strength (Unit: kJ/m²): The Charpy impact strength was measured at room temperature (about 23°C) in accordance with ISO 180.
(2) Flexural modulus (Unit: kgf/cm²): The flexural modulus of a specimen with a thickness of 4 mm was measured at 2 mm/min in accordance with ISO 178.
(3) Coefficient of linear thermal expansion (Unit: µm/m·°C): The coefficient of linear thermal expansion was measured on a specimen having a size of 10 mm × 10 mm × 6.4 mm while increasing the temperature from -30°C to 30°C at a rate of 5°C/min in accordance with ASTM E831.

**Table 1**

| | | Example | | | | | | |
|---|---|---|---|---|---|---|---|---|
| | | 1 | 2 | 3 | 4 | 5 | 6 | 7 |
| (A) (parts by weight) | (A1) | 100 | 100 | 100 | 100 | 100 | 100 | 100 |
| | (A2) | - | - | - | - | - | - | - |
| (B) (parts by weight) | (B1) | 16.7 | 25 | 16.7 | 16.7 | 16.7 | 25 | 8.3 |
| | (B2) | - | - | - | - | - | - | - |
| | (B3) | - | - | - | - | - | - | - |
| | (B4) | - | - | - | - | - | - | - |
| | (B5) | - | - | - | - | - | - | - |
| (C) (parts by weight) | | 16.7 | 16.7 | 25 | 16.7 | 16.7 | 8.3 | 25 |
| (D) (parts by weight) | | 33.3 | 33.3 | 33.3 | 25 | 40 | 33.3 | 33.3 |
| Charpy impact strength | | 28.0 | 30.0 | 31.0 | 30.5 | 27.0 | 27.0 | 30.0 |
| Flexural modulus | | 1,900 | 1,800 | 1,800 | 1,800 | 1,950 | 1,900 | 1,900 |
| Coefficient of linear thermal expansion | | 6.0 | 5.5 | 5.7 | 6.5 | 5.8 | 6.1 | 5.8 |

**Table 2**

| | | Comparative Example | | | | | |
|---|---|---|---|---|---|---|---|
| | | 1 | 2 | 3 | 4 | 5 | 6 |
| (A) (parts by weight) | (A1) | - | 100 | 100 | 100 | 100 | 100 |
| | (A2) | 100 | - | - | - | - | - |
| (B) (parts by weight) | (B1) | 16.7 | 5 | 30 | - | - | - |
| | (B2) | - | - | - | 16.7 | - | - |
| | (B3) | - | - | - | - | 16.7 | - |
| | (B4) | - | - | - | - | - | 16.7 |
| | (B5) | - | - | - | - | - | - |
| (C) (parts by weight) | | 16.7 | 16.7 | 16.7 | 16.7 | 16.7 | 16.7 |
| (D) (parts by weight) | | 33.3 | 33.3 | 33.3 | 33.3 | 33.3 | 33.3 |
| Charpy impact strength | | 30.0 | 18.0 | 33.0 | 25.0 | 30.0 | 25.0 |
| Flexural modulus | | 1,700 | 2,000 | 1,600 | 1,750 | 1,750 | 1,980 |
| Coefficient of linear thermal expansion | | 8.0 | 7.1 | 5.3 | 6.5 | 7.0 | 5.8 |

**Table 3**

| | | Comparative Examηle | | | | |
|---|---|---|---|---|---|---|
| | | 7 | 8 | 9 | 10 | 11 |
| (A) (parts by weight) | (A1) | 100 | 100 | 100 | 100 | 100 |
| | (A2) | - | - | - | - | - |
| (B) (parts by weight) | (B1) | - | 16.7 | 16.7 | 16.7 | 16.7 |
| | (B2) | - | - | - | - | - |
| | (B3) | - | - | - | - | - |
| | (B4) | - | - | - | - | - |
| | (B5) | 16.7 | - | - | - | - |
| (C) (parts by weight) | | 16.7 | 5 | 30 | 16.7 | 16.7 |
| (D) (parts by weight) | | 33.3 | 33.3 | 33.3 | 10 | 50 |
| Charpy impact strength | | 25.0 | 16.5 | 34.0 | 33.0 | 24.5 |
| Flexural modulus | | 1,750 | 2,000 | 1,580 | 1,650 | 2,050 |
| Coefficient of linear thermal expansion | | 7.0 | 7.0 | 5.2 | 7.0 | 5.5 |

From the above results, it can be seen that the polypropylene resin composition of the present invention is excellent in impact resistance (Charpy impact strength), stiffness (flexural modulus), dimensional stability (coefficient of linear thermal expansion), and the balance of these physical properties.

Conversely, in the case of Comparative Example 1, in which a polypropylene resin (A2) having an isotactic index less than the range of the present invention was applied instead of the block polypropylene resin of the present invention, it can be seen that stiffness, dimensional stability, and the like are deteriorated. In the case of Comparative Example 2, in which the content of the melt blend of very low density polyethylene and styrene-based thermoplastic elastomer is less than the range of the present invention, it can be seen that impact resistance, dimensional stability, and the like are deteriorated. In the case of Comparative Example 3, in which the content of the melt blend of very low density polyethylene and styrene-based thermoplastic elastomer exceeds the range of the present invention, it can be seen that stiffness and the like are deteriorated. In the case of Comparative Example 4, in which a melt blend (B2) applying a very low density polyethylene having a density exceeding the range of the present invention was used instead of the melt blend of the present invention, it can be seen that impact resistance, stiffness, and the like are deteriorated. It was confirmed that when a melt blend applying a very low density polyethylene or a polyolefin elastomer having a density less than the range of the present invention is applied, the appearance characteristics and the like of the injection-molded article (molded product) are deteriorated, making it unsuitable for the purpose of the present invention. In the case of Comparative Example 5, in which a melt blend (B3) having a very low density polyethylene content less than the range of the present invention was applied, it can be seen that stiffness, dimensional stability, and the like are deteriorated. In the case of Comparative Example 6, in which a melt blend (B4) having a very low density polyethylene content exceeding the range of the present invention was applied, it can be seen that impact resistance and the like are deteriorated. In the case of Comparative Example 7, in which a simple mixture (B5) of very low density polyethylene and styrene-based thermoplastic elastomer was applied, it can be seen that impact resistance, stiffness, dimensional stability, and the like are deteriorated. In addition, in the case of Comparative Example 8, in which the content of the polyolefin elastomer is less than the range of the present invention, it can be seen that impact resistance, dimensional stability, and the like are deteriorated. In the case of Comparative Example 9, in which the content of the polyolefin elastomer exceeds the range of the present invention, it can be seen that stiffness and the like are deteriorated. In the case of Comparative Example 10, in which the content of talc is less than the range of the present invention, it can be seen that stiffness, dimensional stability, and the like are deteriorated. In the case of Comparative Example 11, in which the content of talc exceeds the range of the present invention, it can be seen that impact resistance and the like are deteriorated.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the invention should be defined by the appended claims rather than by the foregoing description, and the claims and equivalents thereto are intended to cover such modifications and the like as would fall within the scope of the invention.

## Claims

1. A polypropylene resin composition comprising:
about 100 parts by weight of a block polypropylene resin having an isotactic index of about 98.5 wt% or more;
about 8 to about 27 parts by weight of a melt blend comprising about 65 to about 99 wt% of a very low density polyethylene having a density of about 0.88 to about 0.91 g/cm³ measured in accordance with ISO 1183-1, and about 1 to about 35 wt% of a styrene-based thermoplastic elastomer;
about 8 to about 27 parts by weight of a polyolefin elastomer; and
about 20 to about 45 parts by weight of talc.

2. The polypropylene resin composition according to claim 1, wherein the block polypropylene resin has a melt-flow index of about 20 to about 40 g/10 min, measured at 230°C under a load of 2.16 kg in accordance with ASTM D1238.

3. The polypropylene resin composition according to claim 1 or 2, wherein the very low density polyethylene has a melt-flow index of about 1 to about 20 g/10 min, measured at 230°C under a load of 2.16 kg in accordance with ASTM D1238.

4. The polypropylene resin composition according to any one of claims 1 to 3, wherein the styrene-based thermoplastic elastomer comprises at least one of a styrene-ethylene-butylene-styrene block copolymer, a styrene-ethylene-propylene-styrene block copolymer, a styrene-butadiene-styrene block copolymer, a styrene-isoprene-styrene block copolymer, or a styrene-butadiene-butylene-styrene block copolymer.

5. The polypropylene resin composition according to any one of claims 1 to 4, wherein the styrene-based thermoplastic elastomer has a content of a styrene-based monomer of about 5 to about 50 wt%.

6. The polypropylene resin composition according to any one of claims 1 to 5, wherein the styrene-based thermoplastic elastomer has a weight average molecular weight of about 100,000 to about 450,000 g/mol.

7. The polypropylene resin composition according to any one of claims 1 to 6, wherein the polyolefin elastomer comprises at least one of an ethylene-propylene rubber, an ethylene-butene rubber, or an ethylene-octene rubber.

8. The polypropylene resin composition according to any one of claims 1 to 7, wherein the talc has an average particle size of about 0.5 to about 3.8 µm measured with a particle size measuring device.

9. The polypropylene resin composition according to any one of claims 1 to 8, wherein the polypropylene resin composition has a morphology in which the block polypropylene resin, the polyolefin elastomer, and the talc are in a continuous phase, the very low density polyethylene is in a dispersed phase, and the styrene-based thermoplastic elastomer is present at an interface between the continuous phase and the dispersed phase.

10. The polypropylene resin composition according to any one of claims 1 to 9, wherein the polypropylene resin composition has a Charpy impact strength of about 26.5 to about 45 kJ/m², measured in accordance with ISO 180.

11. The polypropylene resin composition according to any one of claims 1 to 10, wherein the polypropylene resin composition has a flexural modulus of about 1,790 to about 2,200 MPa, measured at 2 mm/min in accordance with ISO 178.

12. The polypropylene resin composition according to any one of claims 1 to 11, wherein the polypropylene resin composition has a coefficient of linear expansion of about 5 to about 6.7 µm/m·°C measured for a specimen with a size of 10 mm × 10 mm × 6.4 mm while increasing the temperature from -30°C to 30°C at a rate of 5°C/min according to ASTM E831.

13. A molded article formed from the polypropylene resin composition according to any one of claims 1 to 12.
